# EUROPÄISCHE PATENTSCHRIFT

(11) **EP 3 440 935 B1**
(45) Veröffentlichungstag und Bekanntmachung des Hinweises auf die Patenterteilung: **28.04.2021**
(21) Anmeldenummer: 18187185.6
(22) Anmeldetag: 03.08.2018
(51) Int. Cl.: A01M 29/30

(54) **TIERABWEISERVORRICHTUNG**
ANIMAL DETERRENT DEVICE
DISPOSITIF DÉFLECTEUR POUR ANIMAUX

(30) Priorität: 04.08.2017 DE 102017117757
(43) Veröffentlichungstag der Anmeldung: 13.02.2019
(73) Patentinhaber: J & S retail GmbH, 8820 Wädenswil (CH)
(72) Erfinder: Bühler, Leo, 8820 Wädenswill (CH)
(74) Vertreter: Daub, Thomas

(56) Entgegenhaltungen:
- FR-A1- 2 755 938
- US-A- 2 493 107
- US-A1- 2013 047 933
- US-B1- 8 528 493

## Beschreibung

### Stand der Technik

Die Erfindung betrifft eine Tierabweiservorrichtung nach Anspruch 1.

Es ist bereits eine Tierabweisungsvorrichtung, insbesondere für ein Wasserfahrzeug, vorgeschlagen worden, welche zur Abweisung von Tieren an zumindest einem Seil anordenbar ist, und zumindest einer Barriere, welche dazu vorgesehen ist, ein Überklettern durch Tiere zu verhindern, und zumindest einen Träger aufweist, an welchem die Barriere angeordnet ist und welcher zumindest eine Seilaufnahmeeinheit mit zumindest einer Seilaufnahme umfasst, die zu einer zumindest teilweisen Umschließung des Seils vorgesehen ist Das Dokument FR 2 755 938 zeigt hierzu eine Rattenabweisevorrichtung für Festmachleinen von Seeschiffen.

Die Aufgabe der Erfindung besteht insbesondere darin, eine gattungsgemäße Vorrichtung mit verbesserten Eigenschaften hinsichtlich einer Funktionalität, insbesondere in Hinblick auf eine Schutzwirkung und/oder Installation, bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Tierabweisungsvorrichtung, insbesondere für ein Wasserfahrzeug, welche zur Abweisung von Tieren an zumindest einem Seil anordenbar ist, mit zumindest einer Barriere, welche dazu vorgesehen ist, ein Überklettern durch Tiere zu verhindern, und mit zumindest einem Träger, relativ zu welcher die Barriere drehbar angeordnet ist und welcher zumindest eine Seilaufnahmeeinheit mit zumindest einer Seilaufnahme umfasst, die zu einer seitlichen Einführung und zumindest teilweisen Umschließung des Seils vorgesehen ist.

Es wird vorgeschlagen, dass der Träger zumindest eine Sicherungseinheit aufweist, welche dazu vorgesehen ist, die Seilaufnahmeeinheit gegen ein Öffnen der Umschließung des Seils und/oder ein Verschieben relativ zum Seil zu sichern. Hierdurch kann vorteilhaft eine Funktionalität der Tierabweiservorrichtung verbessert werden. Weiter vorteilhaft kann eine Installation der Tierabweiservorrichtung durch eine seitliche Seileinführung vereinfacht und/oder verbessert werden. Weiter vorteilhaft wird ermöglicht, die Tierabweiservorrichtung an einer festen Position des zumindest einen Seils zu installieren, wodurch eine Schutzwirkung verbessert werden kann. Ferner kann hierdurch vermieden werden, dass bei einer Installation die Tierabweiservorrichtung umständlich das Seil längsseitig in die Tierabweiservorrichtung eingeführt und an die vorgesehene Position verschoben werden muss, wodurch eine Installation weiter vereinfacht werden kann. Insbesondere kann ein Überklettern der Barriere insbesondere mittels einer insbesondere verbesserten Drehbarkeit der Barriere relativ zum Träger vermieden und somit eine Schutzwirkung nochmals verbessert werden, da so Tiere die Barriere nicht überwinden können, ohne dass sie diese durch die Drehbewegung der Barriere relativ zum Träger bei einem Überklettern abwirft.

Unter einer "Tierabweiservorrichtung" soll insbesondere eine Vorrichtung verstanden werden, welche dazu vorgesehen ist, ein Eindringen von Tieren, insbesondere von Schädlingen, Lästlingen, insbesondere Nagetieren, wie beispielsweise Ratten oder dergleichen, zu verhindern. Insbesondere ist die Tierabweiservorrichtung dazu vorgesehen, ein Anbordkommen der Tiere in einer der Anlegestellung des Wasserfahrzeugs zu verhindern. Insbesondere dazu ist die Tierabweiservorrichtung an zumindest einem, insbesondere genau einem, vorzugsweise zumindest zwei und besonders bevorzugt an genau zwei Seilen und/oder mehreren Seilen anordenbar. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Die Barriere ist insbesondere als eine insbesondere ringartige, vorzugsweise kreisringartige Platte ausgebildet. Die Barriere ist insbesondere speziell an eine Eigenschaft eines abzuweisenden Tiers angepasst. Vorzugsweise weist die Barriere einen Außendurchmesser auf, welcher größer und zwar vorzugsweise wesentlich größer ist als eine zumindest eine größte Abmessung, insbesondere Länge, des abzuweisenden Tiers. Unter "wesentlich größer" soll insbesondere zumindest um einen Faktor 1,5, vorzugsweise zumindest um einen Faktor 2 und besonders bevorzugt zumindest um einen Faktor 2,5 größer verstanden werden. Die Barriere weist insbesondere einen Innendurchmesser, welcher größer als ein Abstand der Seile zueinander ist. Ferner kann die Barriere weitere Mittel zur Abweisung von Tieren aufweisen, wie beispielsweise Dornen, Gift oder dergleichen. Insbesondere zu einer Stabilisation der Barriere weist diese vorzugsweise als Verstärkungsstreben ausgebildete Verstärkungen auf. Insbesondere weist die Tierabweiservorrichtung mehrere verschieden ausgebildete Barrieren auf, welche vorzugsweise je nach Wahl des abzuweisenden Tiers montierbar ist. Beispielsweise ist denkbar, dass die verschieden ausgebildeten Barrieren verschiedene Außendurchmesser aufweisen, welche speziell zur Vermeidung eines Überkletterns eines jeweiligen Tiers vorgesehen ist.

Der Träger ist insbesondere dazu vorgesehen, zumindest teilweise eine Gewichtskraft der Barriere aufzunehmen. Insbesondere weist die Tierabweiservorrichtung zumindest eine Trägereinheit auf, welche zumindest teilweise von dem Träger ausgebildet ist. Die Trägereinheit weist insbesondere zumindest einen weiteren Träger auf. Der Träger und der weitere Träger sind zumindest im Wesentlichen identisch zueinander ausgebildet. Unter "zumindest im Wesentlichen identisch" soll insbesondere bis auf Montage und/oder Herstellungstoleranzen identisch verstanden werden.

Der Träger und der weitere Träger sind zueinander punktgespiegelt angeordnet. Der Träger und der weitere Träger sind miteinander kraft- und/oder formschlüssig verbunden. Unter "kraft- und/oder formschlüssig verbunden" soll dabei insbesondere eine lösbare Verbindung verstanden werden, wobei eine Haltekraft zwischen zwei Bauteilen vorzugsweise durch einen geometrischen Eingriff der Bauteile ineinander und/oder eine Reibkraft zwischen den Bauteilen übertragen wird. Alternativ oder zusätzlich könnten der Träger und der weitere Träger stoffschlüssig miteinander verbunden sein. Unter "stoffschlüssig verbunden" soll insbesondere verstanden werden, dass die Masseteile durch atomare oder molekulare Kräfte zusammengehalten werden, wie beispielsweise beim Löten, Schweißen, Kleben und/oder Vulkanisieren. Der Träger ist insbesondere als eine insbesondere runde, vorzugsweise kreisartige Platte ausgebildet. Der Träger weist einen Durchmesser auf, welcher im Wesentlichen dem Innendurchmesser der Barriere entspricht. Unter einer "Seilaufnahmeeinheit" soll insbesondere eine Einheit verstanden werden, welche zumindest eine Seilaufnahme umfasst, die zu einer seitlichen Einführung und zumindest teilweisen Umschließung des Seils vorgesehen ist. Unter einer "seitlichen Einführung" soll insbesondere verstanden werden, dass eine Einführung senkrecht zu einer Haupterstreckungsebene der Seilaufnahme vorgesehen ist. Insbesondere umgreift die Seilaufnahme das Seil um einen Winkel von zumindest 90°, vorzugsweise um zumindest 120°, weiter bevorzugt um zumindest 150° und besonders bevorzugt um zumindest 180°. Besonders bevorzugt umgreift die Seilaufnahme das Seil um einen Winkel von genau 180°. Besonders bevorzugt umfasst die Seilaufnahmeeinheit zumindest eine weitere Seilaufnahme, welche zusammen mit der Seilaufnahme, zu einer zumindest großteiligen Umschließung des Seils vorgesehen ist. Die Seilaufnahmen umgreifen das Seil insbesondere um einen Umgreifwinkel, welcher dem Kreiswinkel geteilt durch die Anzahl der Seilaufnahmen des Trägers entspricht. Beispielsweise beträgt der Umgreifwinkel des der Seilaufnahmen bei einer Gesamtanzahl von zwei jeweils 180°.

Unter einer Unter einer "Haupterstreckungsebene" einer Baueinheit soll insbesondere eine Ebene verstanden werden, welche parallel zu einer größten Seitenfläche eines kleinsten gedachten Quaders ist, welcher die Baueinheit gerade noch vollständig umschließt, und insbesondere durch den Mittelpunkt des Quaders verläuft. Die Sicherungseinheit ist insbesondere dazu vorgesehen durch einen Kraft- und/oder Formschluss, ein Öffnen der Umschließung des Seils und/oder ein Verschieben relativ zum Seil, insbesondere in Richtung einer Haupterstreckungsrichtung des Seils, zu sichern.

Insbesondere zur drehbaren Anordnung des Trägers relativ zur Barriere weist die Tierabweiservorrichtung zumindest eine Lagereinheit auf. Die Lagereinheit ist insbesondere zumindest teilweise einstückig mit der Trägereinheit, insbesondere dem Träger, dem weiteren Träger und/oder der Barriere ausgebildet. Darunter, dass ein erstes Objekt und ein zweites Objekt "zumindest teilweise einstückig" miteinander ausgebildet sind, soll insbesondere verstanden werden, dass zumindest ein Element und/oder Teil des ersten Objekts mit zumindest einem Element und/oder Teil des zweiten Objekts einstückig ausgebildet ist. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Die Lagereinheit weist insbesondere zumindest eine Führung und zumindest eine weitere Führung auf, welche korrespondierend zur Führung ausgebildet ist, welche insbesondere zur drehbaren Lagerung ineinander eingreifen. Insbesondere ist die Führung an dem Träger angeordnet und vorzugsweise mit diesem zumindest teilweise einstückig ausgebildet. Insbesondere ist die weitere Führung an der Barriere angeordnet und vorzugsweise mit dieser zumindest teilweise einstückig ausgebildet. Die Führung ist insbesondere zumindest teilweise von einem Randbereich des Trägers ausgebildet. Ferner ist die weitere Führung zumindest teilweise von einem Randbereich der Barriere ausgebildet. Die Lagereinheit weist insbesondere ein Lager auf. Das Lager kann beispielsweise als ein Gleitlager ausgebildet sein. Vorzugsweise ist das Lager als ein Wälzlager ausgebildet. Vorzugsweise ist das Lager zumindest teilweise einstückig mit der Führungseinheit ausgebildet. Das Lager weist insbesondere zumindest einen Innenring welcher an dem Träger angeordnet und einen Außenring, welcher an der Barriere ist auf, wobei vorzugsweise der Innenring einstückig mit der Führung und weiter bevorzugt der Außenring einstückig mit der weiteren Führung ausgebildet ist. Ferner weist das Lager Wälzkörper auf, welche an dem Innenring angeordnet sind und vorzugsweise als Rollen ausgebildet sind.

In einer bevorzugten Ausgestaltung der Erfindung wird vorgeschlagen, dass der Träger und/oder die Barriere zumindest zweiteilig, insbesondere genau zweiteilig, und vorzugsweise mehrteilig, wie beispielsweise dreiteilig, vierteilig, fünfteilig oder dergleichen, ausgebildet ist. Hierdurch kann auf besonders einfache Art und Weise eine seitliche Einführung des Seils ermöglicht werden. Insbesondere kann eine Installation der Tierabweiservorrichtung am Seil vereinfacht werden. Die Barriere weist insbesondere zumindest ein und vorzugsweise zumindest zwei, besonders bevorzugt genau zwei, Barrieresegmente auf. Das Barrieresegment ist insbesondere zumindest als ein Ringsegment, vorzugsweise als ein Kreisringsegment, ausgebildet. Das Barrieresegment weist einen Umfangswinkel auf, welcher dem Kreiswinkel geteilt durch die Anzahl der Barrieresegmente der Barriere entspricht. Beispielsweise beträgt der Umfangswinkel des Barrieresegments bei einer Gesamtanzahl von zwei Barrieresegmenten 180°. Der Träger weist insbesondere zumindest ein und vorzugsweise zumindest zwei, besonders bevorzugt genau zwei, Trägersegmente auf. Das Trägersegment ist insbesondere zumindest als ein Kreissegment, ausgebildet. Das Trägersegment weist insbesondere einen Umfangswinkel auf, welcher dem Kreiswinkel geteilt durch die Anzahl der Trägersegmente der Barriere entspricht. Beispielsweise beträgt der Umfangswinkel des Trägersegments bei einer Gesamtanzahl von Barrieresegmenten 180°. Insbesondere umgreift die Seilaufnahme das Seil um einen Winkel, welcher den Kreiswinkel geteilt durch die Anzahl der Berrieresegmente und/oder der Trägersegmente entspricht.

Ferner wird vorgeschlagen, dass die Sicherungseinheit zumindest eine Befestigungseinheit aufweist, welche dazu vorgesehen ist, zumindest die Seilaufnahmeeinheit in einem das Seil zumindest teilweise umschließenden Zustand zu befestigen. Hierdurch kann vorteilhaft eine Befestigung der Tierabweiservorrichtung bei einer Installation weiter verbessert werden. Die Befestigungseinheit ist insbesondere zu einem Kraft- und/oder Formschluss der Seilaufnahmeeinheit vorgesehen. Insbesondere verbindet die Befestigungseinheit die Trägersegmente kraft- und/oder formschlüssig miteinander. Denkbar ist, dass die Befestigungseinheit ein Verdrehen der Trägersegmente zueinander verhindert. Besonders bevorzugt verhindert die Befestigungseinheit eine Linearbewegung der Trägersegmente zueinander. Die Befestigungseinheit ist insbesondere dazu vorgesehen durch eine Linearbewegung der Seilaufnahmen zueinander diese miteinander zu verbinden.

Des Weiteren wird ferner vorgeschlagen, dass die Befestigungseinheit zumindest ein Befestigungselement, welches mit der Seilaufnahme verbunden ist, und zumindest ein weiteres korrespondierendes Befestigungselement aufweist, welches mit der weiteren Seilaufnahme verbunden ist, wobei die Befestigungselemente zusammen wirken, um die Seilaufnahmen in einem das Seil zumindest teilweise, vorzugsweise zumindest zu einem Großteil und besonders bevorzugt vollständig, umschließenden Zustand zu befestigen. Hierdurch können auf einfache Art und Weise die Seilaufnahmen gesichert werden. Bevorzugt ist das Befestigungselement als ein Rastelement, wie beispielsweise ein Rasthaken, ausgebildet. Ferner ist das korrespondierende Befestigungselement als ein korrespondierendes Rastelement ausgebildet, wie beispielsweise als eine Rastaufnahme. Hierdurch kann vorteilhaft eine besonders stabile Befestigung erfolgen.

Weiterhin wird vorgeschlagen, dass die Sicherungseinheit zumindest eine Spanneinheit mit zumindest einem Spannelement und vorzugsweise mit zumindest zwei und besonders bevorzugt mit mehreren Spannelementen, umfasst, welches dazu vorgesehen ist, das Seil zumindest teilweise zumindest in der Seilaufnahmeeinheit zu verspannen. Hierdurch kann eine unmittelbare Verspannung des Seils in der Sicherungseinheit erzielt werden. Insbesondere kann derart eine Spannwirkung bei einer Installation der Tierabweiservorrichtung verbessert werden. Das Spannelement ist insbesondere elastisch ausgebildet. Insbesondere ist das Spannelement in einem Zustand, in welchem die Seilaufnahmeeinheit frei von einem Seil ist in einem entspannten Zustand, während das Spannelement insbesondere in einem Zustand, in welchem die Seilaufnahmeeinheit das Seil umschließt verspannt ist und insbesondere das Seil mit einer Spannkraft beaufschlagt. Vorzugsweise sind die Spannelemente zueinander im Wesentlichen identisch ausgebildet.

In einer bevorzugten Ausgestaltung der Erfindung wird vorgeschlagen, dass die Spanneinheit dazu vorgesehen ist, das Seil zumindest in dem zumindest teilweise verspannten Zustand zumindest in der Seilaufnahmeeinheit zu zentrieren. Hierdurch kann vorteilhaft eine besonders feste Befestigung erzielt werden, da insbesondere durch Wellenbewegungen Kräfte auf die Tierabweiservorrichtung übertragen werden und mittels der Spanneinheit gleichmäßig aufgenommen werden können. Insbesondere ist die Spanneinheit dazu vorgesehen mittels des Spannelements das Seil in zumindest zwei gegenüberliegenden Richtungen mit einer gleichen Spannkraft zu beaufschlagen. Das Spannelement ist insbesondere dazu vorgesehen das Seil mit einer Spannkraft in Radialrichtung des Seils zu verspannen. Insbesondere sind die Spannelemente symmetrisch und zwar besonders bevorzugt radialsymmetrisch angeordnet.

In einer besonders bevorzugten Ausgestaltung der Erfindung wird vorgeschlagen, dass die Spanneinheit dazu vorgesehen ist, die Seilaufnahmeeinheit in dem zumindest teilweise verspannten Zustand an verschiedene Seildurchmesser, insbesondere verschiedener Seile, zumindest teilweise anzupassen. Hierdurch kann vorteilhaft eine besonders flexible Installation der Tierabweiservorrichtung erzielt werden. Insbesondere weist die Seilaufnahme einen Wesentlich größeren Durchmesser auf als das Seil, wobei das Spannelement dazu vorgesehen ist, den Öffnungsdurchmesser zu verringern und bei Beaufschlagung durch das Seil bei einer Aufnahme dessen den Öffnungsdurchmesser an diese anpasst.

Ferner wird vorgeschlagen, dass das Spannelement im Bereich der Seilaufnahmeeinheit angeordnet ist. Hierdurch kann vorteilhaft eine unmittelbare Druckbeaufschlagung des Seils mittels des Spannelements erzielt werden, wodurch eine Sicherungswirkung bei einer Installation der Tierabweiservorrichtung weiter verbessert werden kann. Insbesondere ist das Spannelement, insbesondere die Spannelemente, vorzugsweise ringförmig, an einem Rand der Seilaufnahmeeinheit, insbesondere der Seilaufnahme angeordnet.

Insbesondere um ein besonders vorteilhaftes Einspannen des Seils bei einer Installation zu erzielen wird vorzugsweise vorgeschlagen, dass das Spannelement lamellenartig ausgebildet ist. Insbesondere weist das Spannelement eine Form einer Abwicklung auf und zwar insbesondere einer Halbkugelabwicklung.

Ferner wird vorgeschlagen, dass das Spannelement dazu vorgesehen ist, sich zumindest in dem zumindest teilweise verspannten Zustand quer zu einer Haupterstreckungsebene des Seils zu erstrecken. Hierdurch kann vorteilhaft ein Verschieben entlang des Seils verhindert werden. Unter "quer" soll insbesondere verschieden von zumindest im Wesentlichen parallel und/oder zumindest im Wesentlichen senkrecht verstanden werden. Insbesondere soll unter quer zumindest im Wesentlichen diagonal verstanden werden. Unter "im Wesentlichen parallel" soll insbesondere eine Ausrichtung einer Richtung relativ zu einer Bezugsrichtung verstanden werden, wobei die Richtung und die Bezugsrichtung, insbesondere in einer Ebene betrachtet, einen Winkel von 0° einschließen und der Winkel insbesondere eine maximale Abweichung von insbesondere kleiner als 8°, vorteilhaft kleiner als 5° und besonders vorteilhaft kleiner als 2°, aufweist. Unter "zumindest im Wesentlichen senkrecht" soll insbesondere eine Ausrichtung einer Richtung relativ zu einer Bezugsrichtung verstanden werden, wobei die Richtung und die Bezugsrichtung, insbesondere in einer Ebene betrachtet, einen Winkel von 90° einschließen und der Winkel insbesondere eine maximale Abweichung von insbesondere kleiner als 8°, vorteilhaft kleiner als 5° und besonders vorteilhaft kleiner als 2°, aufweist. Insbesondere erstrecken sich die mehreren Spannelemente in unterschiedliche, insbesondere entgegengesetzte Richtungen.

Ferner wird vorgeschlagen, dass der Träger zumindest eine Arretierung aufweist, welche dazu vorgesehen ist, in zumindest einer Arretierstellung ein Verdrehen der Barriere relativ zu dem Träger zu blockieren. Hierdurch kann vorteilhaft ein ungewolltes Verdrehen der Barriere relativ zum Träger, wie es beispielsweise bei einer Installation der Tierabweiservorrichtung hinderlich wäre vermieden werden, wodurch eine Installation weiter verbessert werden kann. Insbesondere weist die Arretierung zumindest eine Freigabestellung auf. In der Freigabestellung ist die Arretierung insbesondere dazu vorgesehen, ein Verdrehen der Barriere relativ zu dem Träger zuzulassen. Die Arretierung weist insbesondere zumindest ein Arretierelement auf, welches in der Arretierstellung und/oder in der Freigabestellung verrastbar ist. Insbesondere verbindet das Arretierelement in der Arretierstellung den Träger und die Barriere formschlüssig miteinander.

Ferner wird vorgeschlagen, dass der Träger zumindest eine weitere Arretierung aufweist, welche dazu vorgesehen ist, in zumindest einer weiteren Arretierstellung die Befestigungseinheit zu arretieren. Hierdurch kann insbesondere eine Installationssicherheit der Tierabweiservorrichtung verbessert werden. Insbesondere kann ein ungewolltes Auslösen der Befestigungseinheit mittels der Arretierung zusätzlich gesichert werden, wodurch ein Verlust durch ins Wasserfallen von Teilen der Tierabweiservorrichtung bei einer Installation und/oder während einer Nutzung der Tierabweiservorrichtung vermieden werden kann. Die weitere Arretierung weist insbesondere eine Freigabestellung auf, in welcher diese die Befestigungseinheit frei gibt. Die weite Arretierung weist insbesondere zumindest ein weiteres Arretierelement auf, welches in der weiteren Arretierstellung und/oder der Arretierstellung verrastbar ist. Vorzugsweise blockiert das weitere Arretierelement in der Arretierstellung formschlüssig ein Lösen der Befestigungselemente voneinander.

Ferner wird vorgeschlagen, dass die Arretierung und die weitere Arretierung zumindest teilweise einstückig ausgebildet sind. Hierdurch kann vorteilhaft eine Freigabe der Drehbarkeit der Barriere relativ zum Träger erfolgen, sobald die Befestigungseinheit gesichert ist und/oder umgekehrt. Ferner kann bei einer Installation vermieden werden, dass Teile, wie beispielsweise die Barriere sich lösen und verloren gehen können. Besonders bevorzugt kann bei der Installation eine Installationsstellung der Bauteile erreicht werden, in welcher die Drehbarkeit der Bauteile zueinander verhindert wird, um so eine Installation weiter zu vereinfachen. Besonders bevorzugt ist die Arretierung zumindest teilweise, vorzugsweise zumindest zu einem Großteil und besonders bevorzugt vollständig identisch mit der weiteren Arretierung. Insbesondere ist das Arretierelement der Arretierung identisch mit dem weiteren Arretierelement der weiteren Arretierung. Ganz besonders bevorzugt ist die Arretierstellung der Arretierung identisch mit der weiteren Freigabestellung der weiteren Arretierung und/oder die Freigabestellung der Arretierung identisch mit der weiteren Arretierstellung der weiteren Arretierung.

In einer besonders bevorzugten Ausgestaltung der Erfindung wird vorgeschlagen, dass der Träger zur Anordnung an zumindest einem weiteren Seil zumindest eine weitere Seilaufnahmeeinheit und vorzugsweise mehrere weitere Seilaufnahmeeinheiten umfasst. Hierdurch kann vorteilhaft eine besonders Stabile Installation der Tierabweiservorrichtung erzielt werden. Weiter vorteilhaft kann derart die Barriere auch bei einer Anordnung an zwei Seile drehbar zentrisch gelagert werden. Insbesondere kann eine Stabilität durch eine symmetrische Anordnung der Seilaufnahmeeinheiten zueinander erreicht werden. Hierdurch kann insbesondere bei einer Nutzung Kräfte von den Seilen gleichmäßig auf die Tierabweiservorrichtung übertragen werden. Insbesondere ist die weitere Seilaufnahmeeinheit versetzt zu der Seilaufnahmeeinheit angeordnet, so dass insbesondere ein geometrischer Mittelpunkt und/oder ein Schwerpunkt der Tierabweiservorrichtung zwischen, insbesondere mittig zwischen, den Seilaufnahmeeinheiten liegt.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines Wasserfahrzeugs, welche mittels Seilen an einem Anleger festgemacht ist,
- Fig. 2: eine perspektivische Darstellung einer Tierabweiservorrichtung, welche an den Seilen angeordnet ist,
- Fig. 3: eine perspektivische Darstellung der Tierabweiservorrichtung, bei einer Installation an den Seilen,
- Fig. 4: eine Teilschnittansicht der Tierabweiservorrichtung mit einer Arretierung in einer Arretierstellung,
- Fig. 5: eine Teilsschnittansicht der Tierabweiservorrichtung mit der Arretierung in einer Freigabestellung,

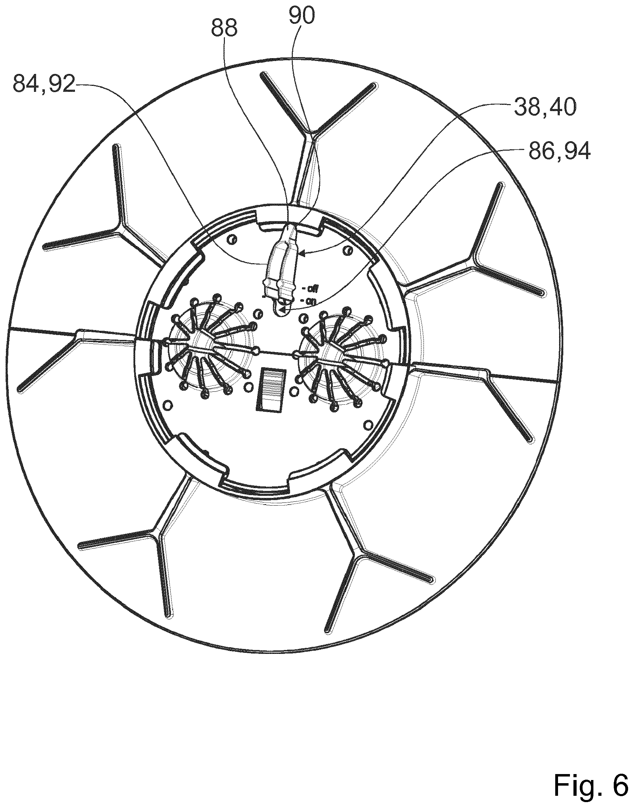

- Fig. 6: eine perspektivische Darstellung der Tierabweiservorrichtung mit der Arretierung in der Arretierstellung und

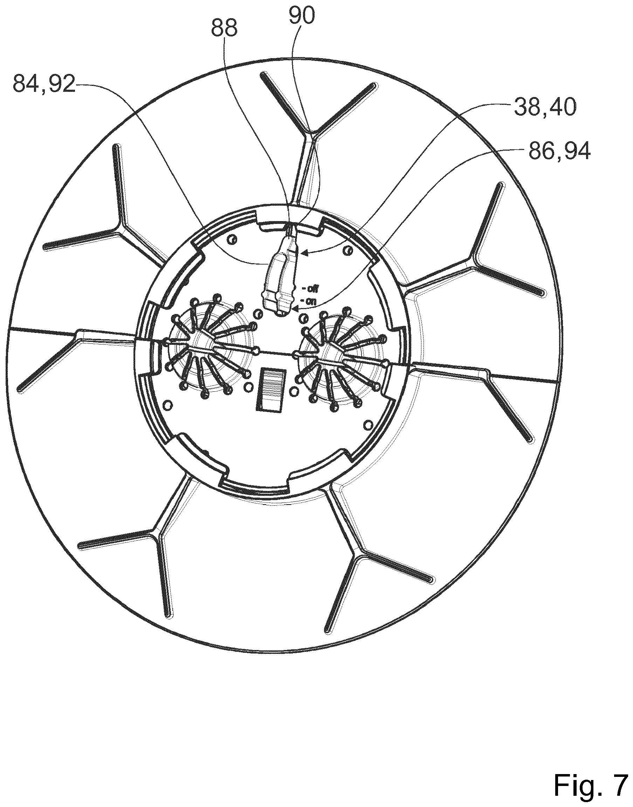

- Fig. 7: eine perspektivische Darstellung der Tierabweiservorrichtung mit der Arretierung in der Freigabestellung.

### Beschreibung der Ausführungsbeispiele

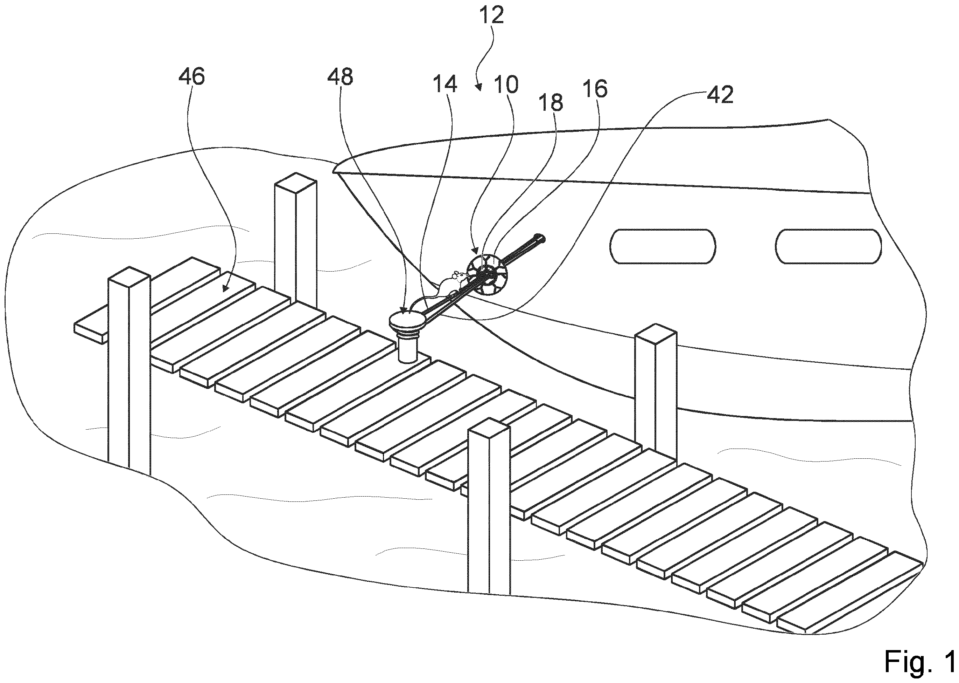

Die Figur 1 zeigt ein Wasserfahrzeug 12, insbesondere ein Schiff, und einen Anleger 46. Das Wasserfahrzeug 12 befindet sich in einer Anlegestellung. In der Anlegestellung ist das Wasserfahrzeug 12 an zumindest einer Anlegeposition 48 des Anlegers 46 festgemacht. Der Übersichtlichkeit halber ist in Figur 1 nur eine Anlegeposition 48 dargestellt und mit einem Bezugszeichen versehen. Der Anleger 46 kann weitere Anlegepositionen 48 aufweisen, an welchen das Wasserfahrzeug 12 festmachbar ist. Im Folgenden ist nur die Anlegeposition 48 näher beschrieben. Die Beschreibung ist auf weiteren Anlegepositionen 48 übertragbar.

Das Wasserfahrzeug 12 ist mit zumindest einem Seil 14 an der Anlegeposition 48 festgemacht. Ferner ist das Wasserfahrzeug 12 mit zumindest einem weiteren Seil 42 an der Anlegeposition 48 festgemacht. Im vorliegenden Fall ist das Wasserfahrzeug 12 mit den zumindest zwei, insbesondere genau zwei, Seilen 14, 42 und zwar dem Seil 14 und dem weiteren Seil 42 an der Anlegeposition 48 festgemacht. Die Seile 14, 42 sind in einem Abstand zueinander angeordnet. Der Abstand der Seile 14, 42 zueinander entspricht zumindest einem Durchmesser der Seile 14, 42. Ferner entspricht der Abstand höchstens einem fünffachen des Durchmessers der Seile 14, 42. Es ist jedoch denkbar, dass das Wasserfahrzeug 12 mit einer von der hier genannten abweichenden Anzahl an Seilen 14, 42 an der Anlegeposition 48 festgemacht ist. Beispielsweise könnte das Wasserfahrzeug 12 mit einem einzigen Seil 14, 42 an der Anlegeposition 48 festgemacht sein.

Ferner offenbart die Figur 1 zumindest eine Tierabweiservorrichtung 10. Vorzugsweise ist je Anlegeposition 48 an welcher das Wasserfahrzeug 12 festgemacht ist zumindest eine Tierabweiservorrichtung 10 vorgesehen. Die Tierabweiservorrichtung 10 ist dazu vorgesehen, ein Anbordkommen von Tieren, wie von beispielsweise Schädlingen, Lästlingen, insbesondere Nagetieren, oder dergleichen, von der Anlegeposition 48 über die Seile 14, 42 zu verhindern. Im vorliegenden Fall ist die Tierabweiservorrichtung 10 als ein Rattenabweiser ausgebildet. Die Tierabweiservorrichtung 10 ist speziell an die Abweisung von Ratten angepasst. Beispielsweise ist eine Dimensionierung der Tierabweiservorrichtung 10 speziell an Eigenschaften von Ratten, wie insbesondere deren Körpergröße, Kletterfertigkeiten oder dergleichen, angepasst.

Zur Abweisung von Tieren ist die Tierabweiservorrichtung 10 an zumindest einem Seil 14, 42 anordenbar. Im vorliegenden Fall ist die Tierabweiservorrichtung 10 an zumindest zwei Seilen 14, 42 und zwar insbesondere genau zwei Seilen 14, 42 anordenbar. Es ist jedoch denkbar, dass die Tierabweiservorrichtung 10 an einer von der hier genannten Anzahl abweichenden Anzahl an Seilen 14, 42 anordenbar ist. Beispielsweise könnte die Tierabweiservorrichtung 10 an einem einzigen Seil 14, 42 anordenbar sein.

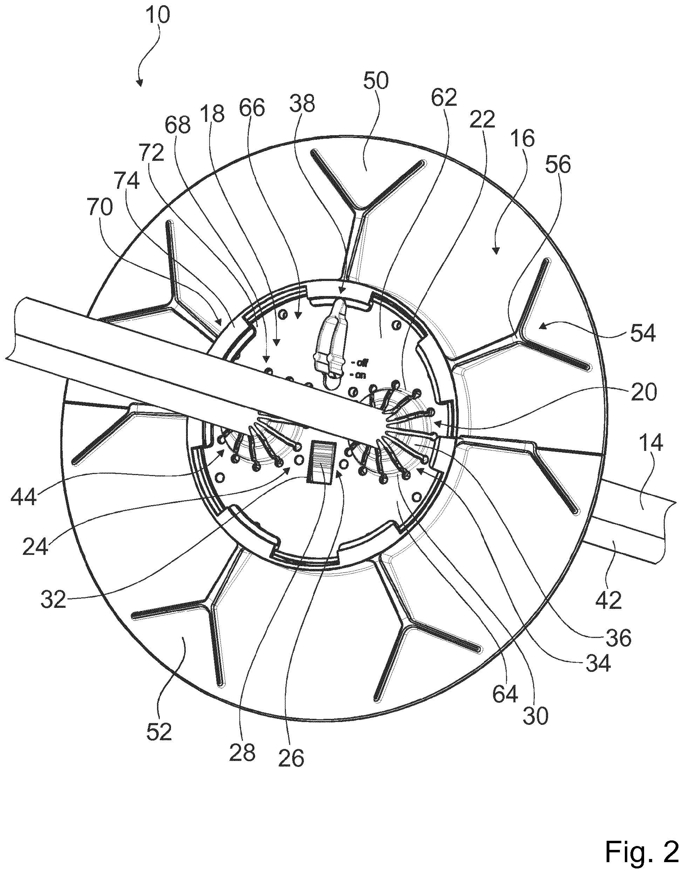

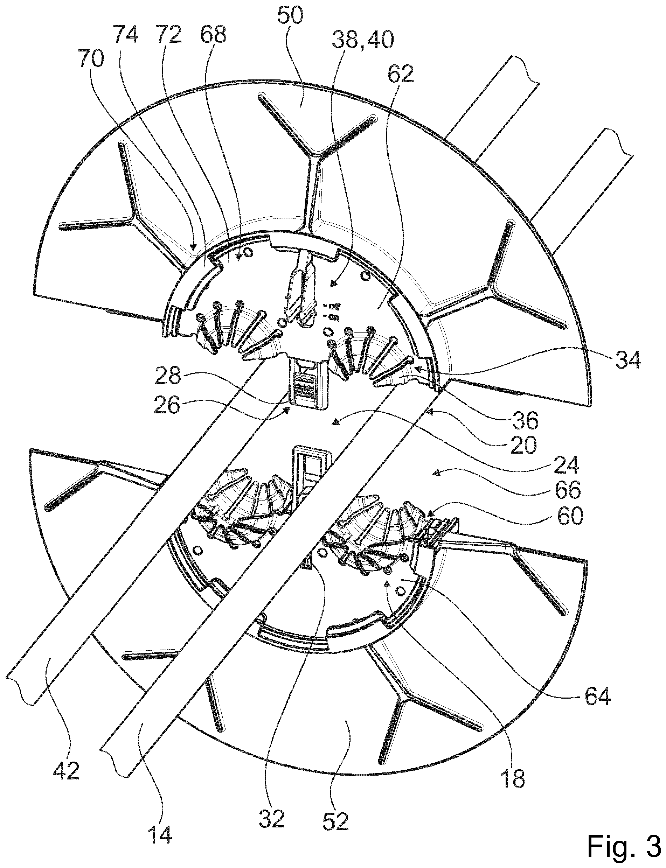

In Figur 2 ist eine perspektivische Darstellung der Tierabweiservorrichtung 10 dargestellt, in welcher diese an den Seilen 14, 42 angeordnet ist. Ferner ist in Figur 3 eine Installation der Tierabweiservorrichtung 10 an den Seilen 14, 42 dargestellt. Zur Abweisung von Tieren weist die Tierabweiservorrichtung 10 zumindest eine Barriere 16 auf. Die Barriere 16 ist dazu vorgesehen ist, ein Überklettern der Tierabweiservorrichtung 10 durch Tiere zu verhindern. Die Barriere 16 ist als eine Platte ausgebildet. Die Barriere 16 ist im vorliegenden Fall ringartig, insbesondere kreisringartig, ausgebildet. Die Barriere 16 weist einen Außendurchmesser auf, welcher größer ist als eine zumindest eine größte Abmessung, insbesondere Länge, eines abzuweisenden Tiers. Vorzugsweise ist der Außendurchmesser der Barriere 16 wesentlich größer als zumindest eine größte Abmessung, insbesondere Länge, eines abzuweisenden Tiers. Die Barriere 16 weist ferner einen Innendurchmesser auf. Der Innendurchmesser der Barriere 16 ist Größer als ein Abstand der Seile 14, 42 zueinander.

Denkbar ist, dass die Barriere 16 einteilig ausgebildet sein kann. Beispielsweise könnte die Barriere 16 insbesondere für den Fall, dass dies einteilig ausgebildet ist, zumindest teilweise elastisch sein, um insbesondere bei einer einteiligen Ausgestaltung der Barriere 16, eine Montage dieser zu ermöglichen. Im vorliegenden Fall ist die Barriere 16 zumindest zweiteilig ausgebildet. Es ist jedoch denkbar, dass Barriere 16 mehrteilig, wie beispielsweise dreiteilig, vierteilig, fünfteilig oder dergleichen, ausgebildet ist. Die Barriere 16 weist zumindest ein Barrieresegment 50 auf. Ferner weist die Barriere 16 zumindest ein weiteres Barrieresegment 52 auf. Demnach weist die Barriere 16 im vorliegenden Fall zumindest zwei, insbesondere genau zwei Barrieresegmente 50, 52 auf. Die Barrieresegmente 50, 52 sind zueinander spiegelsymmetrisch angeordnet. Die Barrieresegmente 50, 52 sind im vorliegenden Fall zumindest im Wesentlichen identisch zueinander ausgebildet. Im Folgenden ist das Barrieresegment 50 weiter beschrieben. Die Beschreibung des Barrieresegments 50 ist auf das weitere Barrieresegment 52 übertragbar.

Das Barrieresegment 50 ist als ein Ringsegment, insbesondere Kreisringsegment, ausgebildet. Das Barrieresegment 50 weist einen Umfangswinkel auf. Der Umfangswinkel entspricht dem Kreiswinkel geteilt durch die Anzahl der Barrieresegmente 50, 52 der Barriere 16. Beispielsweise beträgt im vorliegenden Fall der Umfangswinkel des Barrieresegments 50 180°, da die Anzahl der Barrieresegmente 50, 52 zwei beträgt. Ebenso beträgt im vorliegenden Fall der Umfangswinkel des weiteren Barrieresegments 52 180°.

Zu einer Stabilisation der Barriere 16 weist diese Verstärkungen 54 auf. Die Verstärkung 54 weist Verstärkungsstreben 56 auf. Die Verstärkung 54 erstreckt sich in der Haupterstreckungsebene der Barriere 16. Die Verstärkungsstreben 56 erstrecken sich zumindest teilweise senkrecht zu einer Radialrichtung und/oder zumindest teilweise in Radialrichtung der Barriere 16. Die Verstärkungsstreben 56 sind zueinander rotationssymmetrisch angeordnet. Die Verstärkungsstreben 56 sind im vorliegenden Fall y-förmig ausgebildet. Alternativ oder zusätzlich könnten die Verstärkungsstreben 56 Gitterartig ausgebildet sein.

Denkbar ist, dass die Tierabweiservorrichtung 10 mehrere verschieden ausgebildete Barrieren 16 umfasst, welche, je nach Wahl des abzuweisenden Tiers montierbar sind. Beispielsweise ist denkbar, dass die verschieden ausgebildeten Barrieren 16 verschiedene Außendurchmesser aufweisen, welche speziell zur Vermeidung eines Überkletterns eines bestimmten Tiers vorgesehen ist. Alternativ oder zusätzlich ist denkbar, dass die Barriere 16 mit Abweisungsmitteln versehen ist, wie beispielsweise Dornen und/oder Gift.

Ferner weist die Tierabweiservorrichtung 10 zumindest einen Träger 18 auf. Der Träger 18 ist dazu vorgesehen, zumindest eine Gewichtskraft der Barriere 16 aufzunehmen. Im vorliegenden Fall weist die Tierabweiservorrichtung 10 zumindest einen weiteren Träger 60 auf (vgl. Figur 3). Der Träger 18 und der weitere Träger 60 bilden zumindest teilweise eine Trägereinheit 66 der Tierabweiservorrichtung 10 aus. Der weitere Träger 60 ist punktgespiegelt zum Träger 18 angeordnet. Der Träger 18 und der weitere Träger 60 sind zumindest im Wesentlichen identisch zueinander ausgebildet. Im Folgenden ist der Träger 18 näher beschrieben. Die Beschreibung des Trägers 18 ist auf den weiteren Träger 60 übertragbar.

Der Träger 18 ist als eine Platte ausgebildet. Der Träger 18 ist im vorliegenden Fall rund, insbesondere kreisartig, ausgebildet. Der Träger 18 weist einen Durchmesser auf. Der Durchmesser des Trägers 18 entspricht im Wesentlichen einem Innendurchmesser der Barriere 16. Der Durchmesser des Trägers 18 ist größer als der Abstand der Seile 14, 42 zueinander.

Denkbar ist, dass der Träger 18 einteilig ausgebildet sein kann. Im vorliegenden Fall ist der Träger 18 zumindest zweiteilig ausgebildet. Es ist jedoch denkbar, dass der Träger 18 mehrteilig, wie beispielsweise dreiteilig, vierteilig, fünfteilig oder dergleichen, ausgebildet ist. Der Träger 18 weist zumindest ein Trägersegment 64 auf. Ferner weist der Träger 18 zumindest ein weiteres Trägersegment 64 auf. Demnach weist der Träger 18 im vorliegenden Fall zumindest zwei, insbesondere genau zwei Trägersegmente 62, 64 auf. Die Barrieresegmente 50, 52 sind zueinander spiegelsymmetrisch angeordnet. Die Trägersegmente 62, 64 sind im vorliegenden Fall zumindest, insbesondere bis auf die in der folgenden Beschreibung aufgeführten Abweichungen, im Wesentlichen identisch zueinander ausgebildet. Im Folgenden ist das Trägersegment 62 weiter beschrieben. Die Beschreibung des Trägersegments 62 ist auf das weitere Trägersegment 64 übertragbar.

Das Trägersegment 62 ist als ein Kreissegment ausgebildet. Das Trägersegment 62 weist einen Umfangswinkel auf. Der Umfangswinkel entspricht einem Kreiswinkel geteilt durch die Anzahl der Trägersegmente 62, 64 des Trägers 18. Beispielsweise beträgt im vorliegenden Fall der Umfangswinkel des Trägersegments 62 180°, da die Anzahl der Trägersegmente 62, 64 zwei beträgt. Ebenso beträgt im vorliegenden Fall der Umfangswinkel des weiteren Trägersegments 64 180°.

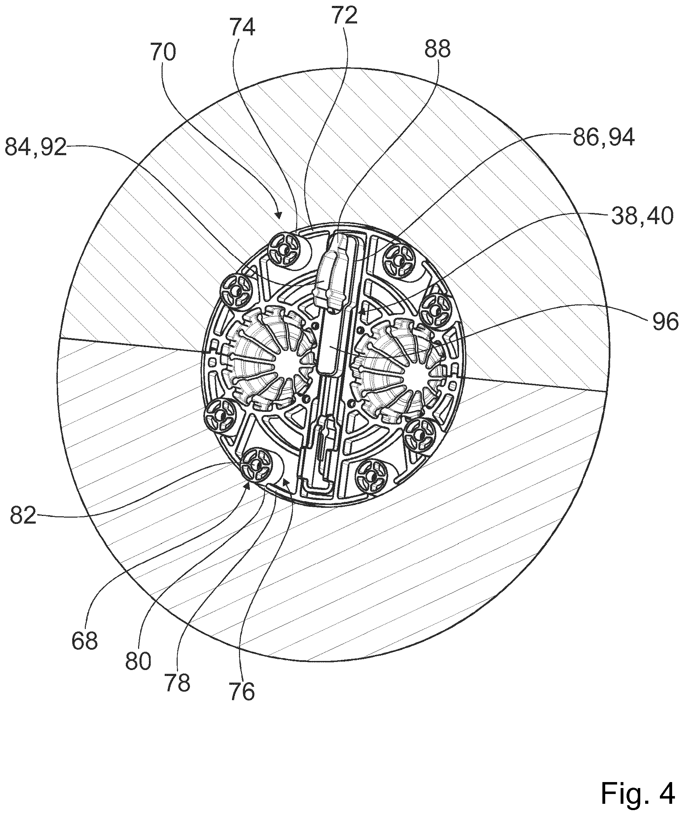

In Figur 4 ist eine Schnittansicht der Tierabweiservorrichtung 10 dargestellt, in welcher diese insbesondere entlang deren Haupterstreckungsebene geschnitten ist. Die Barriere 16 ist an dem Träger 18 angeordnet. Die Barriere 16 ist relativ zum Träger 18 drehbar angeordnet. Zur drehbaren Lagerung der Barriere 16 relativ zum Träger 18 weist die Tierabweiservorrichtung 10 eine Lagereinheit 68 auf. Die Lagereinheit 68 ist zumindest teilweise einstückig mit dem Träger 18, dem weiteren Träger 60, insbesondere der Trägereinheit 66, und/oder der Barriere 16 ausgebildet.

Die Lagereinheit 68 weist zumindest eine Führung 72 auf. Die Lagereinheit 68 weist eine weitere Führung 74 auf. Die weitere Führung 74 ist korrespondierend zur Führung 72 ausgebildet. Zur drehbaren Anordnung des Trägers 18, des weiteren Trägers 60, insbesondere der Trägereinheit 66, und der Barriere 16 zueinander greifen die Führung 72 und die weitere Führung 74 ineinander ein. Die Führung 72 ist an dem Träger 18 angeordnet. Im vorliegenden Fall ist die Führung 72 einstückig mit dem Träger 18 ausgebildet. Die Führung 72 ist von einem Randbereich des Trägers 18 gebildet. Die Führung 72 ist an dem weiteren Träger 60 angeordnet. Im vorliegenden Fall ist die Führung 72 einstückig mit dem weiteren Träger 60 ausgebildet. Die Führung 72 ist von einem Randbereich des weiteren Trägers 60 gebildet. Die weitere Führung 74 ist an der Barriere 16 angeordnet. Im vorliegenden Fall ist die weitere Führung 74 einstückig mit der Barriere 16 ausgebildet. Die weitere Führung 74 ist von einem Randbereich der Barriere 16 gebildet.

Die Lagereinheit 68 weist ferner ein Lager 76 auf. Das Lager 76 kann beispielsweise als ein Gleitlager ausgebildet sein. Im vorliegenden Fall ist das Lager 76 als ein Wälzlager ausgebildet. Das Lager 76 weist zumindest ein Innenlager 78 auf. Das Innenlager 78 ist an dem Träger 18 angeordnet. Das Innenlager 78 ist einstückig mit der Führung 72 ausgebildet. Ferner weist das Lager 76 ein Außenlager 80 auf. Das Außenlager 80 ist einstückig mit der weiteren Führung 74 ausgebildet. Das Lager 76 weist Wälzkörper 82 auf. Die Wälzkörper 82 sind im vorliegenden Fall an dem Innenlager 78 angeordnet. Alternativ oder zusätzlich könnten Wälzkörper 82 an dem Außenlager 80 vorgesehen sein. Die Wälzkörper 82 sind im vorliegenden Fall als Rollen ausgebildet. Alternativ könnten die Wälzkörper 82 auch als Kugeln oder dergleichen ausgebildet sein. Die Wälzkörper 82 sind drehbar an dem Innenlager 78 gelagert. Bei einer Drehung der Barriere 16 relativ zum Träger 18 gleitet das Innenlager 78 mittels der Wälzkörper 82 auf dem Außenlager 80 ab.

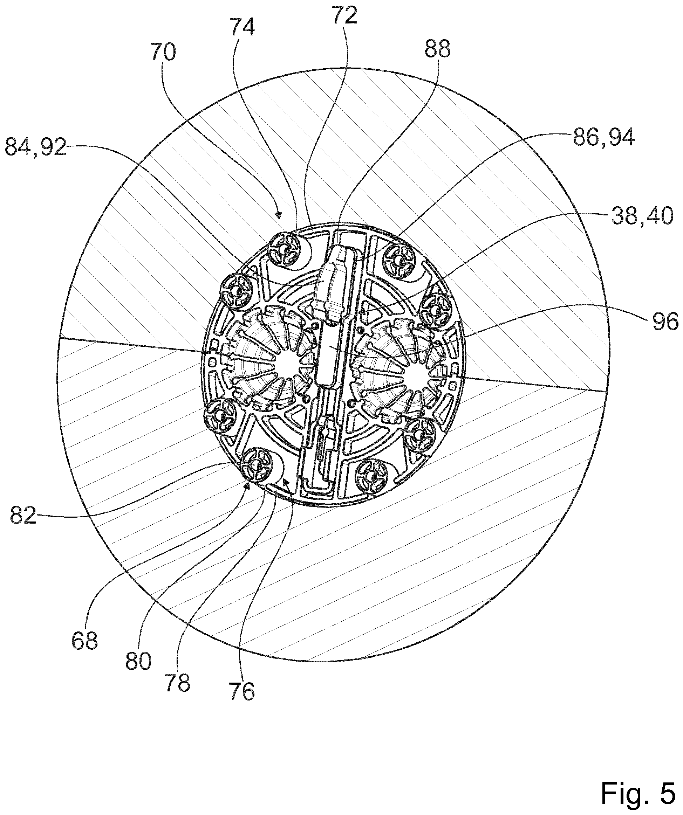

Der Träger 18 weist zumindest eine Arretierung 38 auf. Die Arretierung 38 weist eine Arretierstellung auf. Figur 5 zeigt die Tierabweiservorrichtung 10 mit der Arretierung 38 in der Arretierstellung. In der Arretierstellung blockiert die Arretierung 38 ein Verdrehen der Barriere 16 relativ zu dem Träger 18. Ferner weist die Arretierung 38 eine Freigabestellung auf. Figur 5 zeigt die Tierabweiservorrichtung 10 mit der Arretierung 38 in der Arretierstellung. In der weiteren Arretierstellung lässt die Arretierung 38 ein Verdrehen der Barriere 16 relativ zu dem Träger 18 zu.

Die Arretierung 38 weist ein Arretierelement 84 auf. Ferner weist die Arretierung 38 eine Arretieraufnahme 86 auf. Die Arretieraufnahme 86 ist von einer Ausnehmung des Trägers 18 gebildet. Das Arretierelement 84 ist in der Arretieraufnahme 86 verschiebbar angeordnet. Ferner ist das Arretierelement 84 ist in der Arretieraufnahme 86 in der Arretierstellung verrastbar. Ferner ist das Arretierelement 84 in der Arretieraufnahme 86 in der Freigabestellung verrastbar. Das Arretierelement 84 weist zumindest ein Blockierelement 88 auf. Ferner weist die Barriere 16 ein korrespondierendes Blockierelement 90 auf. Das Blockierelement 88 ist als Nase ausgebildet. Das korrespondierende Blockierelement 90 ist als eine Nut ausgebildet. Befindet sich das Arretierelement 84 in der Arretierstellung, greift das Blockierelement 88 in das korrespondierende Blockierelement 90 ein. Befindet sich das Arretierelement 84 in der Freigabestellung, ist das Blockierelement 88 von dem korrespondierenden Blockierelement 90 gelöst.

Der Träger 18 weist zumindest eine Seilaufnahmeeinheit 20 auf. Die Seilaufnahmeeinheit 20 ist zur Anordnung der Tierabweiservorrichtung 10 an zumindest einem Seil 14, 42 vorgesehen (vgl. Figur 2). Im vorliegenden Fall ist die Seilaufnahmeeinheit 20 zur Anordnung am Seil 14 vorgesehen. Ferner weist der Träger 18 zumindest eine weitere Seilaufnahmeeinheit 44 auf, welche zur Anordnung an dem weiteren Seil 42 vorgesehen ist. Demnach weist der Träger 18 im vorliegenden Fall zwei Seilaufnahmeeinheiten 20, 44 auf. Es ist jedoch denkbar, dass der Träger 18 eine mit einer von der hier genannten Anzahl abweichenden Anzahl an Seilaufnahmeeinheiten 20, 44 aufweist, wie beispielsweise eine Seilaufnahmeeinheit 20, 44 je Seil 14, 42, mit welchem das Wasserfahrzeug 12 an der Anlegeposition 48 festgemacht ist. Die Seilaufnahemeeinheiten 20, 44 sind nebeneinander angeordnet, insbesondere so dass der geometrische Zentrum und/oder der Schwerpunkt der Tierabweiservorrichtung 10 in deren Mittelpunkt angeordnet ist. Insbesondere für den Fall, dass der Träger 18 eine einzige Seilaufnahmeeinheit 20, 44 umfasst, ist diese insbesondere im geometrischen Zentrum, und/oder im Schwerpunkt der Tierabweiservorrichtung 10 angeordnet. Die Seilaufnahmeeinheiten 20, 44 sind im Wesentlichen identisch zueinander ausgebildet. Im Folgenden ist die Seilaufnahmeeinheit 20 weiter beschrieben. Die Beschreibung ist auf die weitere Seilaufnahmeeinheit 44 übertragbar.

Die Seilaufnahmeeinheit 20 ist zumindest teilweise von dem Träger 18 ausgebildet. Die Seilaufnahmeeinheit 20 weist zumindest eine Seilaufnahme 22 auf. Die Seilaufnahme 22 ist zu einer seitlichen Einführung des Seils 114 in den Träger 18 vorgesehen (vgl. Figur 3). Die Seilaufnahme 22 ist von dem Träger 18, insbesondere dem Trägersegment 62, gebildet. Die Seilaufnahme 22 ist als eine Ausnehmung ausgebildet. Ist das Seil 14 in dem Träger 18 eingeführt, so umschließt die Seilaufnahme 22 dieses zumindest teilweise. Die Seilaufnahme 22 umschließt das Seil 14, 42 zumindest um 180°. Ferner weist die Seilaufnahmeeinheit 20 zumindest eine weitere Seilaufnahme 30 auf. Die weitere Seilaufnahme 30 ist von dem Träger 18, insbesondere dem weiteren Trägersegment 64, gebildet. Die weitere Seilaufnahme 30 ist als eine Ausnehmung ausgebildet. Die weitere Seilaufnahme 30 umschließt das Seil 14 zumindest um 180°. Die weitere Seilaufnahme 30 ist zusammen mit der Seilaufnahme 22 zu einer zumindest großteiligen, vorzugsweise vollständigen Umschließung, insbesondere um 360°, des Seils 14 vorgesehen. Die Seilaufnahmen 22, 30 sind zueinander im Wesentlichen identisch ausgebildet.

Der Träger 18 weist zumindest eine Sicherungseinheit 24 auf. Die Sicherungseinheit 24 ist dazu vorgesehen, die Seilaufnahmeeinheit 20 gegen ein Öffnen der Umschließung des Seils 14 zu sichern. Ebenso sichert die Sicherungseinheit 24 die weitere Seilaufnahmeeinheit 44 gegen ein Öffnen der Umschließung des Seils 42. Im Folgenden ist die Sicherungswirkung beispielhaft anhand der Sicherungseinheit 24 und des Seils 14, sowie insbesondere des Trägers 18, beschrieben. Die Beschreibung ist auf die Sicherungswirkung der weiteren Seilaufnahmeeinheit 44 und des weiteren Seils 42, sowie insbesondere des weiteren Trägers 60 übertragbar.

Die Sicherungseinheit 24 weist zumindest eine Befestigungseinheit 26 auf. Die Befestigungseinheit 26 ist dazu vorgesehen, zumindest die Seilaufnahmeeinheit 20 in einem das Seil 14 zumindest teilweise umschließenden Zustand zu befestigen. Die Befestigungseinheit 26 weist zumindest ein Befestigungselement 28 auf. Das Befestigungselement 28 ist als ein Rastelement ausgebildet und zwar insbesondere als ein Rasthaken. Das Befestigungselement 28 ist mit der Seilaufnahme 22 verbunden. Das Befestigungselement 28 ist an dem Träger 18, insbesondere dem Trägersegment 62 angeordnet und insbesondere mit diesem einstückig ausgebildet. Das Befestigungselement 28 ist als ein Rasthaken ausgebildet. Ferner weist die Befestigungseinheit 26 zumindest ein weiteres korrespondierendes Befestigungselement 32 auf. Das weitere Befestigungselement 32 ist mit der weiteren Seilaufnahme 30 verbunden. Das weitere Befestigungselement 32 ist an dem Träger 18, insbesondere dem Trägersegment 64 angeordnet und insbesondere mit diesem einstückig ausgebildet. Das weitere Befestigungselement 32 ist als eine Rastausnehmung ausgebildet. Wirken die Befestigungselemente 28, 32 zusammen, so befestigen diese die Seilaufnahmen 22, 30 in einem das Seil 14 zumindest großteilig umschließenden Zustand.

Ferner ist die Sicherungseinheit 24 dazu vorgesehen die Seilaufnahmeeinheit 20 gegen ein Verschieben der Tierabweiservorrichtung 10 relativ zum Seil 14 zu sichern. Die Sicherungseinheit 24 weist zumindest eine Spanneinheit 34 auf. Die Spanneinheit 34 weist zumindest ein Spannelement 36 auf. Im vorliegenden Fall weist die Spanneinheit 34 mehrere Spannelemente 36 auf. Die Spannelemente 36 sind in einer Lamellenstruktur angeordnet. Der Übersichtlichkeit halber ist in den Figuren nur ein Spannelement 36 mit einem Bezugszeichen versehen. Die Spannelemente 36 sind bis auf ihre Anordnung zueinander identisch ausgebildet. Im Folgenden ist das Spannelement 36 weiter beschrieben. Die Beschreibung ist auf weitere Spannelemente 36 übertragbar.

Das Spannelement 36 ist dazu vorgesehen, das Seil 14 zumindest teilweise zumindest in der Seilaufnahmeeinheit 20 zu verspannen. Das Spannelement 36 ist im Bereich der Seilaufnahmeeinheit 20 angeordnet. Das Spannelement 36 ist einstückig mit dem Träger 18 ausgebildet. Insbesondere sind die Spannelemente 36 teilweise einstückig mit dem Trägersegment 62 und/oder dem weiteren Trägersegment 64 ausgebildet. Das Spannelement 36 ist lamellenartig ausgebildet. Das Spannelement 36 weist eine Form einer geometrischen Abwicklung auf. Im vorliegenden Fall weist das Spannelement 36 eine Form einer Halbkugelsegmentabwicklung auf. Das Spannelement 36 ist dazu vorgesehen, sich zumindest in einem zumindest teilweise verspannten Zustand quer zu einer Haupterstreckungsebene des Seils 14 zu erstrecken. Die Spanneinheit 34 ist dazu vorgesehen, die Seilaufnahmeeinheit 20 in dem zumindest teilweise verspannten Zustand an verschiedene Seildurchmesser zumindest teilweise anzupassen. Die Spannelemente 36 sind ringartig an der Seilaufnahemeeinheit 20 angeordnet, wodurch sie das Seil 14 homogen von allen Seiten mit einer Spannkraft beaufschlagen. Wird das Seil 14 homogen mit der Spannkraft beaufschlagt, so wird dieses von der Spanneinheit 34 in der Seilaufnahmeeinheit 20 zentriert.

Der Träger 18 weist zumindest eine weitere Arretierung 40 auf. Die weitere Arretierung 40 weist eine weitere Arretierstellung auf. In der weiteren Arretierstellung blockiert sie die Befestigungseinheit 26 in einer Stellung, in welcher diese die Seilaufnahmen 22, 30 miteinander verbindet. Ferner weist die weitere Arretierung 40 eine weitere Freigabestellung auf. In der weiteren Freigabestellung lässt die weitere Arretierung 40 ein Lösen der Befestigungseinheit 26 zu.

Die weitere Arretierung 40 weist zumindest ein weiteres Arretierelement 92 auf. Ferner weist die weitere Arretierung 40 zumindest eine weitere Arretieraufnahme 94 auf. Die weitere Arretieraufnahme 94 ist von einer Ausnehmung des Trägers 18 gebildet. Das weitere Arretierelement 92 ist in der weiteren Arretieraufnahme 94 verschiebbar angeordnet. Ferner ist das weitere Arretierelement 92 ist in der weiteren Arretieraufnahme 94 in der weiteren Arretierstellung verrastbar. Ferner ist das weitere Arretierelement 92 in der weiteren Arretieraufnahme 86 in der weiteren Freigabestellung verrastbar. Das weitere Arretierelement 92 weist zumindest ein weiteres Blockierelement 96 auf. Das weitere Blockierelement 96 ist als ein Riegel ausgebildet. Befindet sich das weitere Arretierelement 92 in der weiteren Arretierstellung, blockiert das weitere Blockierelement 96 ein Lösen der Befestigungselemente 28, 32. Das weitere Blockierelement 96 blockiert ein Eindrücken des Befestigungselements 28 relativ zum weiteren Befestigungselement 32. Befindet sich das weitere Arretierelement 92 in der weiteren Freigabestellung, gibt das weitere Blockierelement 96 ein Eindrücken des Befestigungselements 28 relativ zum weiteren Befestigungselement 32 frei.

Die Arretierung 38 und die weitere Arretierung 40 sind zumindest teilweise einstückig ausgebildet. Im vorliegenden Fall ist die weitere Arretierung 40 sogar mit der Arretierung 38 identisch. Das weitere Arretierelement 92 ist einstückig mit dem Arretierelement 84 ausgebildet. Die weitere Arretieraufnahme 94 ist einstückig mit der Arretieraufnahme 86 ausgebildet. Die Arretierstellung der Arretierung 38 entspricht der weiteren Freigabestellung der weiteren Arretierung 40. Die Freigabestellung der Arretierung 38 entspricht der weiteren Arretierstellung der weiteren Arretierung 40.

## Patentansprüche

1. Tierabweisungsvorrichtung (10), insbesondere für ein Wasserfahrzeug (12), welche zur Abweisung von Tieren an zumindest einem Seil (14, 42) anordenbar ist, mit zumindest einer Barriere (16), welche dazu vorgesehen ist, ein Überklettern durch Tiere zu verhindern, und mit zumindest einem Träger (18, 60), relativ zu welcher die Barriere (16) drehbar angeordnet ist und welcher zumindest eine Seilaufnahmeeinheit (20, 44) mit zumindest einer Seilaufnahme (22, 30) umfasst, die zu einer zumindest teilweisen Umschließung des Seils (14, 42) vorgesehen ist, **dadurch gekennzeichnet, dass** die Seilaufnahme zu einer seitlichen Einführung des Seils (14, 42) vorgesehen ist und der Träger (18, 60) zumindest eine Sicherungseinheit (24) aufweist, welche dazu vorgesehen ist, die Seilaufnahmeeinheit (20, 44) gegen ein Öffnen einer Umschließung des Seils (14, 42) und/oder ein Verschieben relativ zum Seil (14, 42) zu sichern.

2. Tierabweisungsvorrichtung nach Anspruch 1, **dadurch gekennzeichnet, dass** der Träger (18, 60) und/oder die Barriere (16) zumindest zweiteilig ausgebildet ist.

3. Tierabweisungsvorrichtung nach Anspruch 1 oder 2, **dadurch gekennzeichnet, dass** die Sicherungseinheit (24) zumindest eine Befestigungseinheit (26) aufweist, welche dazu vorgesehen ist, zumindest die Seilaufnahmeeinheit (20, 44) in einem das Seil (14, 42) zumindest teilweise umschließenden Zustand zu befestigen.

4. Tierabweisungsvorrichtung nach Anspruch 3, **dadurch gekennzeichnet, dass** die Befestigungseinheit (26) zumindest ein als Rastelement ausgebildetes Befestigungselement (28) umfasst.

5. Tierabweisungsvorrichtung nach einem der vorhergehenden Ansprüche, **dadurch gekennzeichnet, dass** die Seilaufnahmeeinheit (20, 44) zumindest eine weitere Seilaufnahme (22, 30) aufweist, welche zusammen mit der Seilaufahme (22, 30), zu einer zumindest teilweisen Umschließung des Seils (14, 42) vorgesehen ist.

6. Tierabweisungsvorrichtung zumindest nach Anspruch 3 und 5, **dadurch gekennzeichnet, dass** die Befestigungseinheit (26) zumindest ein Befestigungselement (28) aufweist, welches mit der Seilaufnahme (22) verbunden ist, und zumindest ein weiteres korrespondierendes Befestigungselement (32) aufweist, welches mit der weiteren Seilaufnahme (30) verbunden ist, wobei die Befestigungselemente (28, 32) zusammen wirken, um die Seilaufnahmen (22, 30) in einem das Seil (14, 42) zumindest großteilig umschließenden Zustand zu befestigen.

7. Tierabweisungsvorrichtung nach einem der vorhergehenden Ansprüche, **dadurch gekennzeichnet, dass** die Sicherungseinheit (24) zumindest eine Spanneinheit (34) mit zumindest einem Spannelement (36) umfasst, welches dazu vorgesehen ist, das Seil (14, 42) zumindest teilweise zumindest in der Seilaufnahmeeinheit (20, 44) zu verspannen.

8. Tierabweisungsvorrichtung nach Anspruch 7, **dadurch gekennzeichnet, dass** die Spanneinheit (34) dazu vorgesehen ist, das Seil (14, 42) zumindest in dem zumindest teilweise verspannten Zustand zumindest in der Seilaufnahmeeinheit (20, 44) zu zentrieren.

9. Tierabweisungsvorrichtung nach Anspruch 7 oder 8, **dadurch gekennzeichnet, dass** die Spanneinheit (34) dazu vorgesehen ist, die Seilaufnahmeeinheit (20, 44) in dem zumindest teilweise verspannten Zustand an verschiedene Seildurchmesser zumindest teilweise anzupassen.

10. Tierabweisungsvorrichtung nach einem der Ansprüche 7 bis 9, **dadurch gekennzeichnet, dass** das Spannelement (36) im Bereich der Seilaufnahmeeinheit (20, 44) angeordnet ist.

11. Tierabweisungsvorrichtung nach einem der Ansprüche 7 bis 10, **dadurch gekennzeichnet, dass** das Spannelement (36) dazu vorgesehen ist, sich zumindest in dem zumindest teilweise verspannten Zustand quer zu einer Haupterstreckungsebene des Seils (14, 42) zu erstrecken.

12. Tierabweisungsvorrichtung nach einem der vorhergehenden Ansprüche, **dadurch gekennzeichnet, dass** der Träger (18, 60) zumindest eine Arretierung (38, 40) aufweist, welche dazu vorgesehen ist, in zumindest einer Arretierstellung ein Verdrehen der Barriere (16) relativ zu dem Träger (18, 60) zu blockieren.

13. Tierabweisungsvorrichtung nach einem der vorhergehenden Ansprüche, **dadurch gekennzeichnet, dass** der Träger (18, 60) zumindest eine weitere Arretierung (38, 40) aufweist, welche dazu vorgesehen ist, in zumindest einer Arretierstellung die Befestigungseinheit (26) zu arretieren.

14. Tierabweisungsvorrichtung nach Anspruch 12 und 13, **dadurch gekennzeichnet, dass** die Arretierung (38) und die weitere Arretierung (40) zumindest teilweise einstückig ausgebildet sind.

15. Tierabweisungsvorrichtung nach einem der vorhergehenden Ansprüche, **dadurch gekennzeichnet, dass** der Träger (18, 60) zur Anordnung an einem weiteren Seil (14, 42) zumindest eine weitere Seilaufnahmeeinheit (20, 44) umfasst.

16. Barriere (16) einer Tierabweisungsvorrichtung nach einem der vorhergehenden Ansprüche.

## Claims

1. Animal repellent device (10), in particular for a watercraft (12), which is arrangeable on at least one rope (14, 42) for a repellence of animals,
with at least one barrier (16) which is configured to prevent animals from climbing thereover, and
with at least one carrier (18, 60), the barrier (16) being arranged rotatably relative to the carrier (18, 60) and the carrier (18, 60) comprising at least one rope receiving unit (20, 44) with at least one rope receptacle (22, 30) which is configured for an least partial encompassment of the rope (14, 42),
**characterised in that** the rope receptacle is configured for a sidewise insertion of the rope (14, 42) and
the carrier (18, 60) comprises at least one securing unit (24), which is configured to secure the rope receiving unit (20, 44) against an opening of an encompassment of the rope (14, 42) and/or against a displacement relative to the rope (14, 42).

2. Animal repellent device according to claim 1,
**characterised in that** the carrier (18, 60) and/or the barrier (16) are/is embodied in at least two parts.

3. Animal repellent device according to claim 1 or 2,
**characterised in that** the securing unit (24) comprises at least one fixation unit (26), which is configured to fixate at least the rope receiving unit (20, 44) in a state of at least partly encompassing the rope (14, 42).

4. Animal repellent device according to claim 3,
**characterised in that** the fixation unit (26) comprises at least one fixation element (28) which is embodied as a latch element.

5. Animal repellent device according to one of the preceding claims,
**characterised in that** the rope receiving unit (20, 44) comprises at least one further rope receptacle (22, 30) which is configured to at least partly encompass the rope (14, 42) together with the rope receptacle (22, 30).

6. Animal repellent device at least according to claims 3 and 5,
**characterised in that** the fixation unit (26) comprises at least one fixation element (28), which is connected with the rope receptacle (22), and comprises at least one further corresponding fixation element (32), which is connected with the further rope receptacle (30),
the fixation elements (28, 32) acting together for fixating the rope receptacles (22, 30) in a state of at least largely encompassing the rope (14, 42).

7. Animal repellent device according to one of the preceding claims,
**characterised in that** the securing unit (24) comprises at least one tensioning unit (34) with at least one tensioning element (36) that is configured for at least partly tensioning the rope (14, 42) at least in the rope receiving unit (20, 44).

8. Animal repellent device according to claim 7,
**characterised in that** the tensioning unit (34) is configured to centre the rope (14, 42), at least in the at least partly tensioned state, at least in the rope receiving unit (20, 44).

9. Animal repellent device according to claim 7 or 8,
**characterised in that** the tensioning unit (34) is configured, in the at least partly tensioned state, to at least partly adapt the rope receiving unit (20, 44) to different rope diameters.

10. Animal repellent device according to one of claims 7 to 9,
**characterised in that** the tensioning element (36) is arranged in a region of the rope receiving unit (20, 44).

11. Animal repellent device according to one of claims 7 to 10,
**characterised in that** the tensioning element (36) is configured, at least in the at least partly tensioned state, to extend transversely to a main extension plane of the rope (14, 42).

12. Animal repellent device according to one of the preceding claims,
**characterised in that** the carrier (18, 60) comprises at least one blocking (38, 40) which is configured, in at least one blocking position, to block a rotation of the barrier (16) relative to the carrier (18, 60).

13. Animal repellent device according to one of the preceding claims,
**characterised in that** the carrier (18, 60) comprises at least one further blocking (38, 40) which is configured, in at least one blocking position, to block the fixation unit (26).

14. Animal repellent device according to claims 12 and 13,
**characterised in that** the blocking (38) and the further blocking (40) are implemented at least partly integrally.

15. Animal repellent device according to one of the preceding claims,
**characterised in that** the carrier (18, 60) comprises at least one further rope receiving unit (20, 44) for an arrangement on a further rope (14, 42).

16. Barrier (16) of an animal repellent device according to one of the preceding claims.

## Revendications

1. Dispositif repoussant d'animaux (10), en particulier pour un véhicule nautique (12), qui peut être disposé sur au moins une corde (14, 42) pour repousser des animaux,
avec au moins une barrière (16) prévue pour empêcher un franchissement en grimpant par animaux, et
avec au moins une porteuse (18, 60), la barrière (16) étant disposée de telle manière qu'elle soit tournable par rapport à la porteuse (18, 60) et la porteuse (18, 60) comprenant au moins une unité de récipient-corde (20, 44) incluant au moins un récipient-corde (22, 30) qui est prévu pour entourer la corde (14, 42) au moins partiellement,
**caractérisé en ce que** le récipient-corde est prévu pour une insertion latérale de la corde (14, 42) et la porteuse (18, 60) comporte au moins une unité de sécurisation (24) qui est prévue pour sécuriser l'unité de récipient-corde (20, 44) contre une ouverture d'un entourage de la corde (14, 42) et/ou contre un déplacement par rapport à la corde (14, 42).

2. Dispositif repoussant d'animaux selon la revendication 1,
**caractérisé en ce que** la porteuse (18, 60) et/ou la barrière sont/est implémenté/e/s au moins en deux parties.

3. Dispositif repoussant d'animaux selon la revendication 1 ou 2,
**caractérisé en ce que** l'unité de sécurisation (24) comporte au moins une unité de fixement (26) prévue pour fixer au moins l'unité de récipient-corde (20, 44) dans un état où elle entoure la corde (14, 42) au moins partiellement.

4. Dispositif repoussant d'animaux selon la revendication 3,
**caractérisé en ce que** l'unité de fixement (26) comprend au moins un élément de fixement (28) qui est réalisé comme élément d'encliquetage.

5. Dispositif repoussant d'animaux selon l'une des revendications précédentes,
**caractérisé en ce que** l'unité de récipient-corde (20, 44) comporte au moins un autre récipient-corde (22, 30) qui est prévue, conjointement avec le récipient-corde (22, 30), pour au moins partiellement entourer la corde (14, 42).

6. Dispositif repoussant d'animaux au moins selon les revendications 3 et 5,
**caractérisé en ce que** l'unité de fixement (26) comprend au moins un élément de fixement (28), qui est raccordé au récipient-corde (22), et comprend au moins un autre élément de fixement correspondant (32), qui est raccordé à l'autre récipient-corde (30),
les éléments de fixement (28, 32) agissant ensemble pour un fixement des récipients-corde (22, 30) dans un état où les récipients-corde (22, 30) entourent la corde (14, 42) au moins largement.

7. Dispositif repoussant d'animaux selon l'une des revendications précédentes,
**caractérisé en ce que** l'unité de sécurisation (24) comporte au moins une unité de tension (34) avec au moins un élément de tension (36) prévu pour au moins partiellement tensionner la corde (14, 42) au moins dans l'unité de récipient-corde (20, 44).

8. Dispositif repoussant d'animaux selon la revendication 7,
**caractérisé en ce que** l'unité de tension (36) est prévue pour un centrage de la corde (14, 42), au moins dans l'état au moins partiellement tensionné, au moins dans l'unité de récipient-corde (20, 44).

9. Dispositif repoussant d'animaux selon la revendication 7 ou 8,
**caractérisé en ce que** l'unité de tension (34) est prévue, dans l'état au moins partiellement tensionné, pour au moins partiellement adapter l'unité de récipient-corde (20, 44) aux diamètres de corde différents.

10. Dispositif repoussant d'animaux selon l'une des revendications 7 à 9,
**caractérisé en ce que** l'élément de tension (36) est disposé dans une région de l'unité de récipient-corde (20, 44).

11. Dispositif repoussant d'animaux selon l'une des revendications 7 à 10,
**caractérisé en ce que** l'élément de tension (36) est prévu, au moins dans l'état au moins partiellement tensionné, pour s'étendre en travers d'un plan d'étendue principal de la corde (14, 42).

12. Dispositif repoussant d'animaux selon l'une des revendications précédentes,
**caractérisé en ce que** la porteuse (18, 60) comporte au moins un arrêt (38, 40) prévu, dans au moins une position d'arrêt, pour bloquer une rotation de la barrière (16) par rapport à la porteuse (18, 60).

13. Dispositif repoussant d'animaux selon l'une des revendications précédentes,
**caractérisé en ce que** la porteuse (18, 60) comporte au moins un autre arrêt (38, 40) prévu, dans au moins une position d'arrêt, pour bloquer l'unité de fixement (26).

14. Dispositif repoussant d'animaux selon les revendications 12 et 13,
**caractérisé en ce que** l'arrêt (38) et l'autre arrêt (40) sont réalisés au moins partiellement intégralement.

15. Dispositif repoussant d'animaux selon l'une des revendications précédentes,
**caractérisé en ce que** la porteuse (18, 60), pour être disposé sur une autre corde (14, 42), comporte au moins une autre unité de récipient-corde (20, 44).

16. Barrière (16) d'un dispositif repoussant d'animaux selon l'une des revendications précédentes.
